# EUROPÄISCHE PATENTANMELDUNG

(11) **EP 2 163 901 A1**
(43) Veröffentlichungstag der Anmeldung: **17.03.2010**
(21) Anmeldenummer: 08015977.5
(22) Anmeldetag: 10.09.2008
(51) Int. Cl.: G01N 35/10

(54) **Verfahren und Dosiereinrichtung zum Dosieren einer Flüssigkeit in einen Aufnahmekanal eines Testelementes zur Analyse von Körperflüssigkeiten**

(71) Anmelder: Roche Diagnostics GmbH, 68305 Mannheim (DE); F.HOFFMANN-LA ROCHE AG, 4070 Basel (CH)
(72) Erfinder: Bauer, Andreas, 69493 Hirschberg (DE); Degenhardt, Volker, 64646 Heppenheim (DE)
(74) Vertreter: Petirsch, Markus

(57) **Zusammenfassung**

Verfahren zum Dosieren einer Flüssigkeit in einen Aufnahmekanal eines Testelementes (6) zur Analyse von Körperflüssigkeiten mittels einer Dosiereinrichtung (1). Die Dosiereinrichtung (1) umfasst eine Dosierkammer (9), ein mit der Dosierkammer (9) in Fluidverbindung stehendes Dosierrohr (2) zur Übertragung von Flüssigkeiten in den Aufnahmekanal (4) des Testelementes (6), eine Flüssigkeitssteuereinrichtung (14) zur dosierten Steuerung des Flüssigkeitsstroms von der Dosierkammer (9) durch das Dosierrohr (2) in den Aufnahmekanal (4), und eine Bewegungseinrichtung (16), durch die eine Relativbewegung zwischen dem Dosierrohr (2) und dem Testelement (6) bewirkt werden kann, wobei der Bewegungsweg eine Ruheposition und eine Arbeitsposition des Dosierrohres (2) relativ zu dem Aufnahmekanal (4) des Testelementes (6) einschließt und eine Dosierspitze (3) des Dosierrohres (2) in der Arbeitsposition näher bei dem Aufnahmekanal (4) ist als in der Ruheposition.

Das Verfahren umfasst die folgenden Schritte:

Betätigen der Bewegungseinrichtung (16) derart, dass das Dosierrohr (2) aus der Ruheposition in die Arbeitsposition bewegt wird und Betätigen der Flüssigkeitssteuereinrichtung (14) derart, dass eine definierte Flüssigkeitsmenge aus der Dosierkammer (9) durch das Dosierrohr (2) in den Aufnahmekanal (4) des Testelementes (6) dosiert abgegeben wird. Dabei ist die Spitze (3) des Dosierrohres (2) in der Arbeitsposition dem Aufnahmekanal (4) des Testelementes (6) derart angenähert, dass während der dosierten Abgabe eine Flüssigkeitsbrücke zwischen der Dosierspitze (3) des Dosierrohres (2) und dem Aufnahmekanal (4) des Testelementes (6) gebildet wird und am Ende der dosierten Flüssigkeitsabgabe wenigstens Teile der Flüssigkeit durch Saugkraft in den Aufnahmekanal (4) gelangen.

## Beschreibung

Die vorliegende Erfindung betrifft ein Verfahren zur Dosierung einer Flüssigkeit in einen Aufnahmekanal eines Testelementes mittels einer Dosiereinrichtung. Das Testelement dient zur Analyse von Körperflüssigkeiten auf einen darin enthaltenen Analyten. Die Erfindung betrifft auch eine Dosiervorrichtung, um eine Körperflüssigkeit in den Aufnahmekanal eines Testelementes zu dosieren, sowie eine disposible Kartusche zum Dosieren einer Flüssigkeit in einen solchen Aufnahmekanal.

Bei der Analyse von Körperflüssigkeitsproben auf einen darin enthaltenen Analyten wird im Bereich der medizinischen Analytik prinzipiell zwischen Analysesystemen mit "Nassreagenzien" und Analysesystemen mit "Trockenreagenzien" unterschieden. Zur Durchführung einer Analyse mit Nassreagenzien sind in der Regel technisch aufwendige, große Analysegeräte notwendig, die die erforderlichen vielfältigen Bewegungen der einzelnen Elemente ermöglichen.

Analysesysteme, die mit Trockenreagenzien arbeiten, weisen meist Testelemente auf, in die die Reagenzien integriert sind. Solche Testelemente sind typischerweise Teststreifen, bei denen eine flüssige Probe die Reagenzien im Teststreifen anlöst und deren Reaktion zu einer messbaren Änderung einer Messgröße führt. Die Messgröße wird an dem Testelement mit optischen oder elektrochemischen Verfahren gemessen. Derartige Testsysteme sind preiswert und einfach zu handhaben. Ein kontrollierter und mehrstufiger Reaktionsablauf ist mit Teststreifen und ähnlichen Analyseelementen jedoch nicht möglich. Insbesondere kann keine Steuerung einer zeitlichen Abfolge von einzelnen Reaktionsschritten vorgenommen werden.

Mehrstufige Reaktionssequenzen (Testprotokolle) lassen sich dagegen mit Nass-Analysesystemen realisieren. Die leistungsfähigen Geräte ermöglichen beispielsweise einen mehrstufigen Reaktionsablauf, wie er bei immunchemischen Analysen erforderlich ist, und der häufig auch die Trennung einer gebundenen und einer freien Phase, eine sogenannte Bound/Free-Trennung umfasst. Mit Nass-Analysesystemen lassen sich eine Vielzahl von Testprotokollen zur Bestimmung zahlreicher Analyten durchführen, die sich zwar vielfältig unterscheiden, aber alle eine aufwendige Handhabung mit mehreren Reaktionsstufen bedingen. Die hierbei verwendeten Geräte sind für viele Anwendungsfälle jedoch zu groß, zu teuer und zu aufwendig in der Handhabung.

Analysesysteme mit steuerbaren Testelementen vereinen die Vorteile beider Analysesysteme. Sie erlauben einen extern gesteuerten Flüssigkeitstransport, also eines Transports, der mittels eines Elements außerhalb des Testelementes gesteuert wird. Diese Steuerung kann auch auf der Anwendung von Druckunterschieden oder der Änderung von Kraftwirkungen basieren. Häufig erfolgt eine externe Steuerung durch Zentrifugalkräfte, die auf ein rotierendes Testelement einwirken. Dennoch sind diese Analysesysteme kompakt und einfach zu bedienen.

Steuerbare Testelemente haben üblicherweise ein Gehäuse, das aus einem formstabilen Kunststoffmaterial besteht und wenigstens einen von dem Gehäuse umschlossenen Analysefunktionskanal. Der Analysefunktionskanal besteht vielfach aus einer Aufeinanderfolge mehrerer Kanalabschnitte und dazwischenliegenden erweiterten Kammern. Die Strukturen und Dimensionen des Analysefunktionskanals werden durch Profilierung der Kunststoffteile erzielt, die durch Spritzgießtechniken oder andere bekannte Verfahren hergestellt werden.

Analysesysteme mit steuerbaren Testelementen ermöglichen die Miniaturisierung von Testprotokollen, die bisher nur auf großen Laborsystemen durchführbar waren. Hierbei lassen sich relativ geringe Mengen an einer Körperflüssigkeitsprobe analysieren. Diese Mengen werden in der Regel über eine Dosierstation in einen Analysefunktionskanal eingebracht, der auch ein Probenanalysekanal sein kann. Andere Analysefunktionskanäle dienen beispielsweise der Aufnahme von Waschflüssigkeit oder Waschpuffern, die für die Durchführung der Reaktionsabläufe notwendig sind. Weitere zu applizierende Flüssigkeiten können beispielsweise auch eine Reaktionslösung, eine Waschlösung oder ein Verdünnungspuffer sein.

Die Flüssigkeiten werden ebenso wie die Körperflüssigkeitsprobe üblicherweise mittels einer Dosierstation zugeführt, die eine Dosierpumpe, zum Beispiel eine Kolbenpumpe, und ein Röhrchen zum Einspritzen der Flüssigkeit aufweist, das auch als Dosiernadel bezeichnet wird. Daneben ist es auch möglich, die Flüssigkeiten manuell zu dosieren, zum Beispiel mittels einer Handpipette oder einer Spritze.

Bei der Dosierung von geringen Flüssigkeitsmengen mittels einer Dosierpumpe wird Flüssigkeit aus einem Reservoir einer Dosierkammer zugeführt und beim Dosieren dann aus dieser Kammer durch die Dosiernadel abgegeben. Das Volumen des Reservoirs ist dabei um ein Vielfaches größer als das der Dosierkammer, so dass die in dem Reservoir bevorratete Flüssigkeitsmenge für eine Vielzahl von Anwendungen ausreicht. Dies kann allerdings auch zu Problemen führen, da die meisten Flüssigkeitsmengen einer Alterung unterliegen und nicht beliebig lange für die durchzuführende Analyse verwendet werden können. Manche der für die Analyse benötigten Flüssigkeiten können bei einer längeren Lagerung auskristallisieren und sowohl die Verbindungsschläuche zwischen Reservoir und Dosierkammer als auch die Dosierpumpe verstopfen, was aufwändige Reparaturen bedingt. Um dies zu verhindern, müssen die Dosierstationen häufig aufwendig gereinigt und gewartet werden. Schläuche müssen zudem regelmäßig ausgewechselt werden.

Um das Problem der Verschmutzung zu umgehen, sind im Stand der Technik Dosiereinrichtungen bekannt, die eine auswechselbare Dosierkartusche umfassen, welche ein Reservoir, eine Dosierkammer mit Dosierkolben und eine Dosiernadel einschließt. Ein derartiges System ist beispielsweise aus der US 2005/0035156 A1 und aus der US 2007/0272710 A1 bekannt.

Bei vielen Reaktionsabläufen müssen jedoch die zugeführten Flüssigkeitsmengen sehr exakt sein. Insbesondere bei sehr geringen Mengen an zugeführter Flüssigkeit sind die Anforderungen hier sehr streng. Teilweise ist eine Genauigkeit von wenigen Zehntel Mikrolitern gefordert.

Es besteht somit die Aufgabe, die den Testelementen zuzuführende Flüssigkeit in ihrer Menge sehr exakt zu dosieren.

Gelöst wird die vorliegende Aufgabe durch ein Verfahren mit den Merkmalen des Anspruchs 1, eine Dosiereinrichtung mit den Merkmalen des Anspruchs 4 sowie durch eine disposible Kartusche mit den Merkmalen des Anspruchs 16. Die rückbezogenen Unteransprüche weisen vorteilhafte Ausgestaltungen der einzelnen Gegenstände aus.

Um eine Flüssigkeit in einen Aufnahmekanal eines Testelementes zur Analyse von Körperflüssigkeiten zu dosieren, wird eine erfindungsgemäße Dosiereinrichtung verwendet. Die zu dosierende Flüssigkeit kann entweder eine Probenflüssigkeit oder auch eine andere für die Analyse und die erforderlichen Reaktionsabläufe notwendige Flüssigkeit, z. B. ein Waschpuffer, sein. Der Aufnahmekanal ist beispielsweise Teil eines Analysefunktionskanals und hat bevorzugt eine Aufnahmeöffnung. Als Analysefunktionskanal kann neben dem Probenanalysekanal auch ein Waschkanal oder Ähnliches dienen. Unter Dosieren wird im Sinne der Erfindung das Hinzufügen oder Abgeben einer bemessenen, also dosierten Menge verstanden.

Die erfindungsgemäße Dosiereinrichtung schließt eine Dosierkammer und ein mit der Dosierkammer in Fluidverbindung stehendes Dosierrohr ein, um eine Flüssigkeit aus der Dosierkammer in den Aufnahmekanal des Testelementes zu übertragen. Die Dosiereinrichtung umfasst daneben eine Flüssigkeitssteuereinrichtung zur dosierten Steuerung des Flüssigkeitsstroms von der Dosierkammer durch das Dosierrohr in den Aufnahmekanal und eine Bewegungseinrichtung, durch die eine Relativbewegung zwischen dem Dosierrohr und dem Testelement bewirkt werden kann. Der Bewegungsweg der Relativbewegung schließt eine Ruheposition und eine Arbeitsposition des Dosierrohres relativ zu dem Aufnahmekanal des Testelementes ein, wobei eine Dosierspitze des Dosierrohres in der Arbeitsposition näher bei dem Aufnahmekanal ist, als in der Ruheposition. Die Bewegungseinrichtung bewirkt folglich ein Annähern und Entfernen zwischen dem Dosierrohr und dem Testelement. Dabei spielt es keine Rolle, ob das Dosierrohr oder das Testelement bewegt werden oder ob beide relativ zueinander bewegt werden. Es ist folglich auch möglich, bei einem feststehenden Dosierrohr das Testelement an das Dosierrohr derart anzunähern, dass das Dosierrohr in seine Arbeitsposition gelangt.

Im Folgenden wird ohne Beschränkung der Allgemeinheit davon ausgegangen, dass die Relativbewegung zwischen Dosierrohr und Testelement durch eine Bewegung des Dosierrohres hervorgerufen wird. Das Testelement wird nicht auf das Dosierrohr zu oder weg bewegt, dass es dem Rohr angenähert oder von ihm entfernt wird.

Die Spitze des Dosierrohres ist in der Arbeitsposition dem Aufnahmekanal des Testelementes derart angenähert, dass während der dosierten Abgabe der Flüssigkeit aus dem Dosierrohr eine Flüssigkeitsbrücke zwischen der Dosierspitze des Dosierrohres und dem Aufnahmekanal des Testelementes gebildet wird, und dass am Ende der dosierten Flüssigkeitsabgabe wenigstens Teile der Flüssigkeitsmenge durch Saugkraft in den Aufnahmekanal gelangen.

Im Rahmen der Erfindung wurde festgestellt, dass wenigstens am Ende der dosierten Flüssigkeitsabgabe die Spitze des Dosierrohres und der Aufnahmekanal derart angenähert sind, dass auch die zuletzt aus der Spitze ausgetretene Teilmenge der Flüssigkeit in den Aufnahmekanal derart eingesaugt wird, dass keine Flüssigkeit an der Außenseite der Dosierspitze zurückbleibt. Mit anderen Worten gelangt die gesamte aus der Dosierspitze ausgetretene Flüssigkeitsmenge in den Dosierkanal, ohne dass etwas an der Dosierspitze hängen bleibt. Somit wird auch der "letzte Tropfen" in den Kanal gesaugt. Hierdurch ist die in den Kanal abgegebene Flüssigkeitsmenge sehr exakt bestimmt. Auch bei mehreren hintereinander erfolgenden Abgaben von Flüssigkeit wird stets die genau gleiche Menge abgegeben. Dabei ist die Abgabe jedenfalls so genau, dass die Unterschiede vernachlässigbar klein sind.

Folglich ist die Dosierspitze am Ende der Flüssigkeitsabgabe an ihrer Außenseite bzw. Rohrmündung derart frei von Flüssigkeit, dass keine oder nur eine vernachlässigbare Flüssigkeitsmenge an der Spitze anhaftet. Auf diese Weise lässt sich eine Dosiergenauigkeit erzielen, die eine Abweichung der dosierten Mengen von höchstens ± 2,5 µl gewährleistet. In der Regel beträgt die Abweichung höchstens ± 1,5 µl, in den meisten Fällen höchstens ± 0,5 µl

Ein genaues Dosieren einer Flüssigkeit in einen Aufnahmekanal eines Testelementes zur Analyse von Körperflüssigkeiten wird mittels einer oben beschriebenen Dosiereinrichtung durchgeführt. Erfindungsgemäß umfasst das Verfahren dabei folgende Schritte:

Betätigen der Bewegungseinrichtung derart, dass das Dosierrohr aus der Ruheposition in die Arbeitsposition bewegt wird. Hierbei ist, wie oben beschrieben, eine Relativbewegung zwischen Dosierrohr und Testelement erforderlich. Ein weiterer Verfahrensschritt umfasst das

Betätigen der Flüssigkeitssteuereinrichtung derart, dass eine definierte Flüssigkeitsmenge aus der Dosierkammer durch das Dosierrohr in den Aufnahmekanal des Testelementes abgegeben wird. Dies erfolgt in der Regel durch eine Bewegung eines Kolbens in der Dosierkammer.

Durch den Verfahrensablauf wird erzielt, dass die Spitze des Dosierrohres in der Arbeitsposition dem Testelement derart angenähert ist, dass während der dosierten Abgabe eine Flüssigkeitsmenge zwischen der Dosierspitze des Dosierrohres und dem Aufnahmekanal des Analyseelements gebildet wird und am Ende der dosierten Flüssigkeitsabgabe Teile der Flüssigkeit durch Saugkraft in den Aufnahmekanal gelangen. Am Ende der Flüssigkeitsabgabe sind dann alle aus der Dosierspitze austretenden Teile der Flüssigkeit in den Aufnahmekanal gelangt.

Die hierzu notwendigen Verfahrensschritte können in der gerade beschriebenen Reihenfolge oder in einer beliebigen Reihenfolge stattfinden. Wichtig ist nur, dass wenigstens am Ende der Flüssigkeitsabgabe das Dosierrohr in der Arbeitsposition angeordnet ist, damit die gesamte Flüssigkeit in den Aufnahmekanal übertragen wird.

Vorteilhafterweise wird die Dosierspitze des Dosierrohres in der Arbeitsposition dem Aufnahmekanal derart angenähert, dass sie sich in dem Aufnahmekanal befindet. Das Dosierrohr, mindestens jedoch die Dosierspitze, erstreckt sich dann durch die Aufnahmeöffnung in den Aufnahmekanal hinein.

Im Rahmen der Erfindung wurde festgestellt, dass in der Arbeitsposition des Dosierrohres der kürzeste Abstand zwischen der Dosierspitze und einer der Dosierspitze in Bewegungsrichtung gegenüberliegenden Wand des Aufnahmekanals höchstens 1 mm, bevorzugt höchstens 0,8 mm, besonders bevorzugt höchstens 0,7 mm und sehr bevorzugt höchstens 0,5 mm beträgt. Im Sinne der Erfindung wird als "in Bewegungsrichtung gegenüberliegende Wand" bei einem Kanal mit im wesentlichen senkrechten Seitenwänden der Boden des Aufnahmekanals verstanden; bei trichterförmigen Aufnahmekanälen jedoch die Trichterwand. Der kürzeste Abstand (Distanz) zwischen der Dosierspitze und einer Wand bzw. dem Boden ist die senkrecht zu der Wand bzw. zu dem Boden gebildete (kürzeste) Strecke zur Dosierspitze. Wird der Abstand zwischen der Dosierspitze und dem Rand der Aufnahmeöffnung des Aufnahmekanals betrachtet, so ist die kürzeste Strecke gemeint.

In einer bevorzugten Ausgestaltung der Dosiereinrichtung schließt die Dosiereinrichtung ein bewegbares Dosierelement ein, das sich wenigstens teilweise in die Dosierkammer erstreckt. Das Dosierelement ist auf einem Bewegungsweg zwischen einer Startposition, in der sich ein kleinerer Teil des Dosierelements in die Dosierkammer erstreckt, und einer Endposition, bei der sich ein größerer Teil des Dosierungselements erstreckt, relativ zu der Dosierkammer bewegbar. Durch die Bewegung des Dosierelements von der Startposition in die Endposition wird ein Flüssigkeitsvolumen aus der Dosierkammer verdrängt, das der abzugebenden Flüssigkeitsmenge entspricht. Bevorzugt ist dabei das Volumen des Dosierelements geringer als das Volumen der Dosierkammer, beispielsweise um den Faktor 10. Dies hat den Vorteil, dass die Dosierkammer in ihren Maßen nicht besonders genau sein muss. Um eine exakte Menge an Flüssigkeit abgeben zu können, reicht es aus, dass das Volumen des Dosierelements, mindestens das Volumen des sich zwischen der Startposition und der Endposition zusätzlich in die Dosierkammer erstreckenden Teilvolumens des Dosierelements hochgenau ist. Somit reicht es aus, wenn das Dosierelement ein Präzisionsteil ist. Damit wird die Dosiereinrichtung insgesamt sehr kostengünstig, da bei der Herstellung der Dosierkammer keine hohen Toleranzen eingehalten werden müssen.

Der im Sinne der Erfindung verwendete Ausdruck "Ende der dosierten Flüssigkeitsabgabe" wird genau dann erreicht, wenn das Dosierelement in seiner Endposition ist, also an einem Endpunkt des Bewegungswegs des Dosierelements, wenn es zum Stillstand kommt. In der Endposition des Dosierelements ist die verdrängte Flüssigkeitsmenge abgegeben worden. In diesem Moment muss auch die zuletzt aus der Dosierspitze abgegebene Teilmenge der Flüssigkeit eine Flüssigkeitsbrücke zu dem Aufnahmekanal bilden und in den Kanal durch Saugwirkung eingesaugt werden und zwar derart, dass keine Reste an der Außenseite der Dosierspitze hängen bleiben.

Erfindungsgemäß wird die gestellte Aufgabe des genauen Dosierens einer Flüssigkeit in einen Aufnahmekanal eines Testelementes auch durch eine disposible Kartusche gelöst, die ein Bestandteil einer (insbesondere der oben beschriebenen) Dosiereinrichtung sein kann. Die erfindungsgemäße Kartusche umfasst ein Dosiermodul mit einer Dosierkammer und einem mit der Dosierkammer in Fluidverbindung stehendem Dosierrohr zur Übertragung der Flüssigkeit in den Aufnahmekanal des Testelementes, ein Reservoir für Flüssigkeit und ein Verbindungsrohr zur Fluidverbindung zwischen dem Reservoir und der Dosierkammer. Das Dosierrohr des Dosiermoduls ist auf einem Bewegungsweg beweglich, der (wie oben beschrieben) eine Ruheposition und eine Arbeitsposition einschließt. In der Arbeitsposition ist die Dosierspitze dem Aufnahmekanal derart angenähert, dass während der dosierten Abgabe eine Flüssigkeitsbrücke zwischen der Dosierspitze und dem Aufnahmekanal gebildet wird, die auch am Ende der Abgabe besteht, und am Ende der dosierten Flüssigkeitsabgabe wenigstens Teile der Flüssigkeitsmenge durch Saugkraft in den Aufnahmekanal gelangen. Hierbei werden die letzten aus der Dosierspitze austretenden Teilmengen der Flüssigkeit vollständig in den Aufnahmekanal gesaugt, so dass keine oder nur eine vernachlässigbare Flüssigkeitsmenge an der Dosierspitze der disposiblen und somit austauschbaren Kartusche verbleibt. Bevorzugt wird dabei jedoch keine Flüssigkeit aus dem inneren der Dosierspitze mit herausgesaugt. Dies ist wichtig, um die Flüssigkeit sehr exakt dosieren zu können.

Die disposible Kartusche umfasst folglich alle Teile und Komponenten, die mit der zu dosierenden Flüssigkeit in Berührung kommen. Sobald das Reservoir der Kartusche leer, die zeitlich begrenzte Haltbarkeit der Dosierflüssigkeit abgelaufen ist oder ein Defekt an einem der flüssigkeitsführenden Teile, beispielsweise ein Verkleben, stattfindet, wird die Kartusche entsorgt. Damit ist gewährleistet, dass alle flüssigkeitsführenden Teile regelmäßig ausgetauscht werden. Eine teure und aufwändige Wartung, wie sie bei großen Dosiersystemen durchzuführen ist, entfällt.

Die Erfindung wird nachfolgend anhand von den in den Figuren dargestellten bevorzugten Ausführungsformen näher erläutert. Die dort dargestellten Besonderheiten können einzeln oder in Kombination verwendet werden, um bevorzugte Ausgestaltungen der Erfindung zu schaffen. Die hier beschriebenen Ausführungsformen stellen keine Einschränkung der durch die Ansprüche definierten Erfindung dar. Es zeigen:
- Fig. 1: eine Prinzipskizze der Annäherung einer Dosierspitze an einen Aufnahmekanal eines Testelementes;
- Fig. 2: eine Prinzipskizze einer erfindungsgemäßen Dosiereinrichtung;
- Fig. 3: eine disposible Kartusche mit einem Dosiermodul und einem Reservoir;
- Fig. 4: eine Schnittzeichnung durch die Kartusche aus Figur 3;
- Fig. 5: eine Schnittdarstellung eines Details des Dosiermoduls aus Figur 3;
- Fig. 6: eine Schnittdarstellung einer Dosiereinrichtung mit Kartusche und Testelement;
- Fig. 7: eine Detailansicht aus Figur 6;
- Fig. 8: weitere Detailansichten der Kartusche
- Fig. 9: eine Detailansicht eines Wippventils

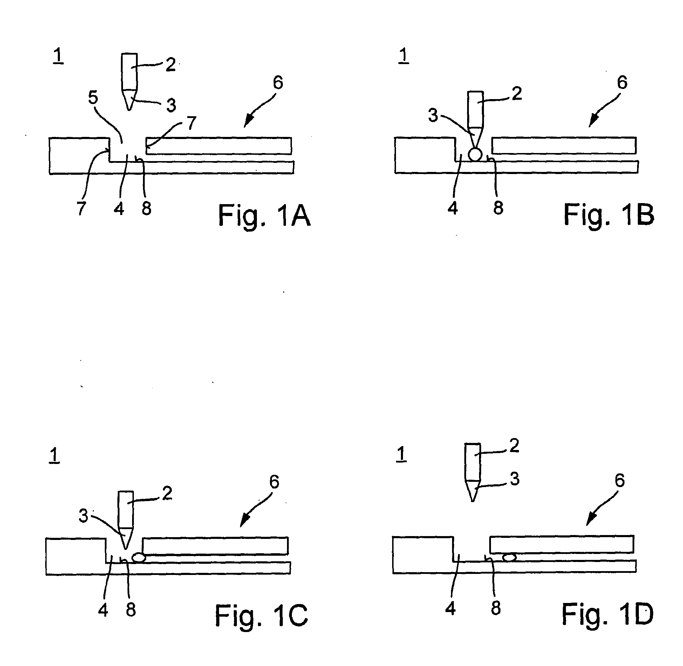

Anhand von Figur 1 a-d wird das prinzipielle Verfahren zum Dosieren einer Flüssigkeit in einen Aufnahmekanal eines bewegbaren, vorzugsweise rotierbaren Testelementes beschrieben. Von einer Dosiereinrichtung 1 ist aus Gründen der Übersichtlichkeit lediglich ein Dosierrohr 2 mit einer Dosierspitze 3 skizziert. Das Dosierrohr 2 steht in Fluidverbindung mit einer hier nicht dargestellten Dosierkammer, aus der eine Flüssigkeit durch das Rohr 2 in einen Aufnahmekanal 4 eines stehenden, nicht bewegten Testelementes 6 abgegeben wird. Der Aufnahmekanal 4 hat eine Aufnahmeöffnung 5 an seiner Oberseite. Das bevorzugte scheibenartige Testelement 6 ist beispielsweise als eine Disc ausgebildet, ähnlich einer Compactdisc für Daten oder Musik, die um eine Drehachse horizontal rotieren kann.

In einem ersten Schritt, der in Figur 1 a gezeigt ist, wird eine Relativbewegung zwischen dem Dosierrohr 2 und dem Testelement 6 durchgeführt. In dem hier gezeigten Beispiel ist das Testelement 6 in seiner Vertikalposition fixiert. Das Dosierrohr 2 wird nach unten in Richtung auf das Testelement 6 zubewegt, bis es eine Arbeitsposition erreicht. In der Arbeitsposition ist die Dosierspitze 3 dem Aufnahmekanal 4 derart angenähert, dass sich in die Spitze 3 durch die Aufnahmeöffnung 5 in den Aufnahmekanal 4 erstreckt.

Nun folgt die Abgabe einer Flüssigkeitsmenge, die hier exemplarisch in Form von nur einem Tropfen erfolgt, Fig. 1 b. Die Dosierspitze 3 erreicht die Arbeitsposition jedenfalls noch vor dem Ende der Flüssigkeitsabgabe, bevorzugt vor Beginn der Flüssigkeitsabgabe.

In der Arbeitsposition ist die Dosierspitze 3 den Wänden 7 und dem Boden 8 des Aufnahmekanals 4 derart angenähert, dass eine Flüssigkeitsbrücke zu dem Boden 8 des Aufnahmekanals 4 gebildet wird. Die Flüssigkeitsbrücke bleibt auch am Ende der dosierten Abgabe der Flüssigkeit bestehen; Teile der Flüssigkeit gelangen durch Saugkraft in den Aufnahmekanal 4, was in Figur 1c verdeutlicht ist. Der Flüssigkeitstropfen bewegt sich nun in den Aufnahmekanal 4 hinein und wird dort durch Kapillarwirkung weitertransportiert, Figur 1d. Das Dosierrohr 2 wird nach oben von dem Testelement 6 wegbewegt, bis es seine Ruheposition erreicht. Da das Einsaugen der Flüssigkeit, einschließlich des letzten Restes, sehr schnell (kleiner 1 Sekunde) geschieht, kann die Dosierspitze 3 schon nach einer Sekunde, bevorzugt schon nach 0,5 Sekunden nach dem Ende des Dosiervorgangs angehoben werden.

Wie den Prinzipbildern nach Figur 1 zu entnehmen ist, ist eine sehr exakte Positionierung der Dosierspitze 2 notwendig. Die Dosierspitze 3 wird dem Testelement 6 derart angenähert, dass der kleinste Abstand ihrer Dosierspitze 3 und dem Boden 8 des Aufnahmekanals 4 höchstens 1 mm beträgt. Auf diese Weise ist es möglich, auch geringe Flüssigkeitsmengen von beispielsweise 13 µl mit einer Genauigkeit von ± 20 % zu erzielen.

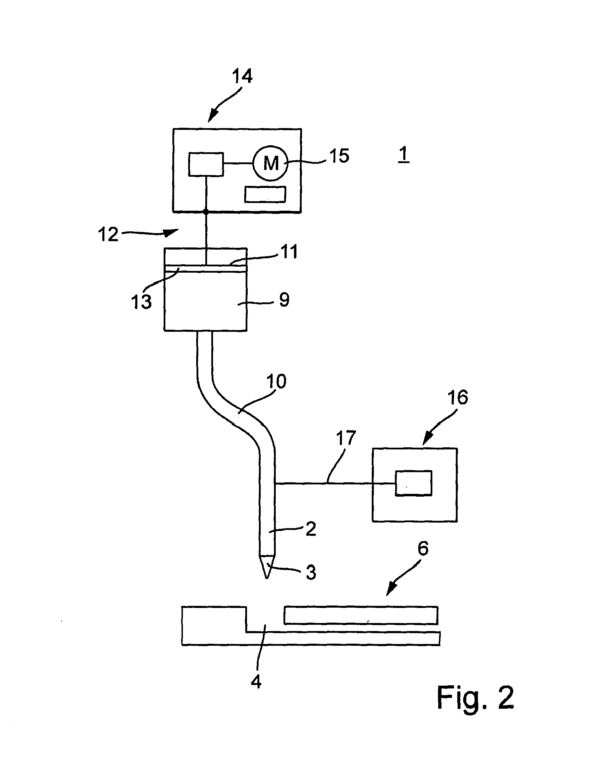

Figur 2 zeigt eine schematische Ansicht einer Dosiereinrichtung 1 und eines Testelementes 6, in dessen Aufnahmekanal 4 eine Flüssigkeit abgegeben wird. Die Dosiereinrichtung 1 umfasst neben dem Dosierrohr 2 mit der Dosierspitze 3 eine Dosierkammer 9, die über ein flexibles Abgaberohr 10 mit der Dosierspitze 2 in Fluidkontakt steht. Die Dosierkammer 9 schließt ein Dosierelement 11 ein, das als Kolben 13 ausgebildet ist. Der Kolben 13, der Bestandteil einer Kolbenpumpe 12 ist, reicht in die Dosierkammer 9 hinein und wird zur Flüssigkeitsabgabe nach unten bewegt. Die Kolbenpumpe 12 wird über eine Flüssigkeitssteuereinrichtung 14 [fluid control device] angesteuert, die beispielsweise einen Motor 15 und einen Antrieb umfasst, um den Kolben 13 anzutreiben. Die Flüssigkeitssteuereinrichtung 14 umfasst daneben auch weitere Komponenten, insbesondere eine elektronische Steuerung, um eine gezielte Flüssigkeitsabgabe zu realisieren.

Eine Bewegungseinrichtung 16 umfasst einen Antrieb, zum Bewegen eines Absenkarms 17, der mit dem Dosierrohr 2 verbunden ist, so dass eine Bewegung des Absenkarms 17 zu einer Bewegung des Dosierrohres 2 führt.

Wenn die zu dosierende Flüssigkeit auskristallisieren kann, müssen die Schläuche, Rohre und Pumpen der Dosiereinrichtung 1 in regelmäßigen Abständen gereinigt und gewartet werden. Da alle Komponenten fest eingebaut und mit der zu dosierenden Flüssigkeit gefüllt sind, ist eine Reinigung und Wartung sehr aufwändig. Aus diesem Grunde werden Dosiereinrichtungen verwendet, die eine auswechselbare Kartusche umfassen.

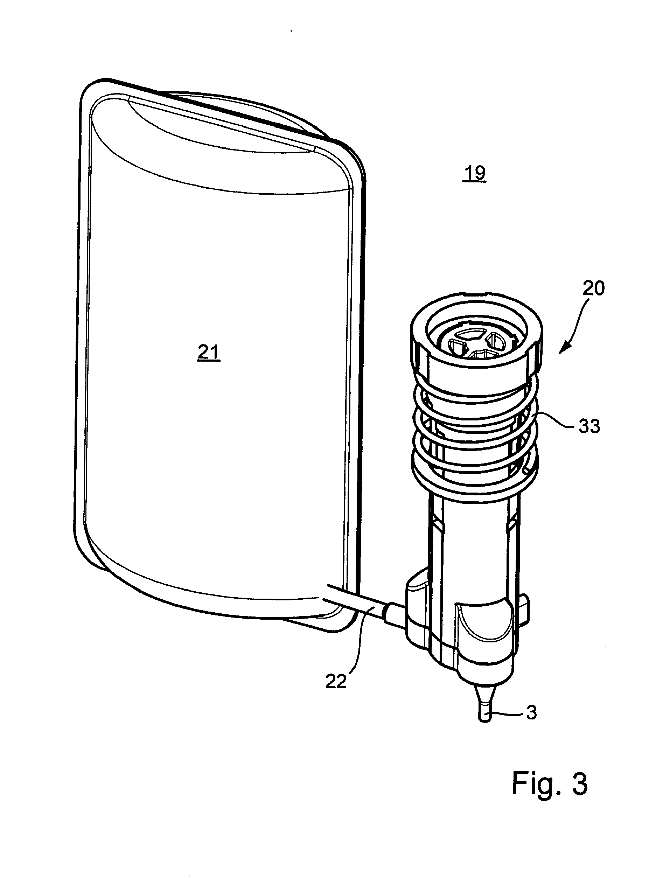

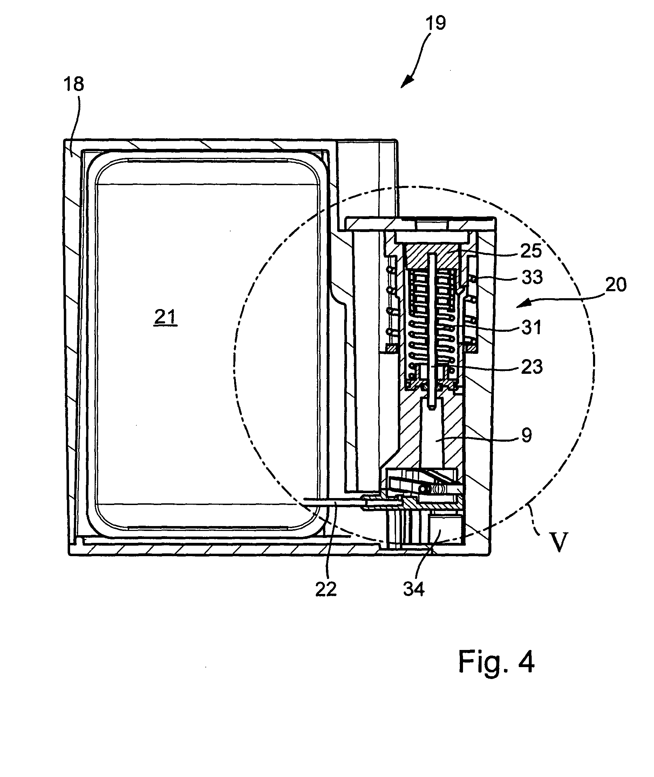

Eine erfindungsgemäße disposible Kartusche 19 einer Dosiereinrichtung ist in Figur 3 (ohne Gehäuse) und in Figur 4 dargestellt. Die Kartusche 19 umfasst ein Dosiermodul 20, ein Reservoir 21, in dem die zu dosierende Flüssigkeit in einer größeren Menge bevorratet wird, und ein Verbindungsrohr 22 zur Fluidverbindung zwischen dem Reservoir 21 und dem Dosiermodul 20.

Das Dosiermodul 20 der Kartusche 19 umfasst bevorzugt die Dosierkammer 9 und das Dosierrohr 2 mit der Dosierspitze 3. Bevorzugt sind das Dosierrohr 2 und die Dosierkammer 9 als Bestandteil des Dosiermoduls 20 relativ zueinander derart fixiert, dass sie gemeinsam von der Ruheposition in die Arbeitsposition bewegbar sind. Eine Bewegung des Dosierrohres 2 führt nun folglich auch zu einer Bewegung des Dosiermoduls 20 und der Dosierkammer 9. Deshalb ist das Verbindungsrohr 22 bevorzugt flexibel ausgebildet, beispielsweise als ein biegbarer Schlauch. Die Bewegung des Dosierrohres 2 wird also durch eine Bewegung des Dosiermoduls 20 gegenüber dem Gehäuse 18 der Kartusche realisiert.

Zur Integration der Kartusche 19 in eine Dosiereinrichtung 1 wird sie in eine dafür vorgesehene, hier nicht dargestellte Aufnahme eingesetzt. Da die komplette Dosiertechnik (einschließlich Reservoir, Dosierkammer, Dosierelement) in der Kartusche 19 enthalten ist, muss nur der (elektrische) Antrieb über eine mechanische Schnittstelle, nämlich einen Aktuator, angekoppelt werden. Die Antriebe selbst sind nicht Bestandteil der disposiblen Kartusche 19 sondern verbleiben auch beim Wechseln der Kartusche 19 in der Dosiereinrichtung 1. Da die Dosierkammer 9 fest mit dem Reservoir 21 verbunden ist, entfällt eine störanfällige Fluidkupplung zwischen dem Dosiermodul 20 und dem Reservoir 21, wie sie im Stand der Technik vielfach benötigt wird.

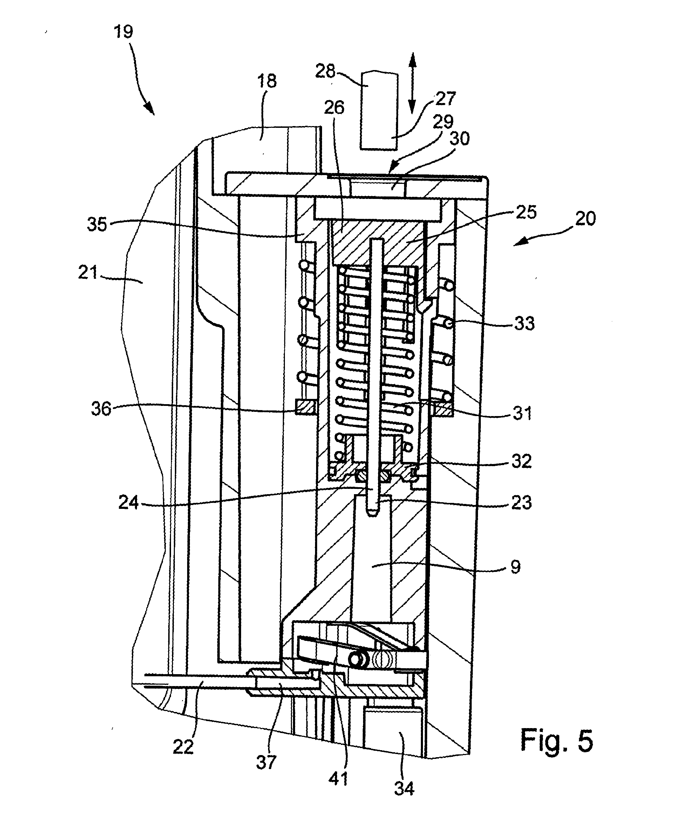

Wie den Figuren 4 und 5 zu entnehmen ist, schließt das Dosiermodul 20 auch ein Dosierelement 23 ein, das ein stiftartiger Dosierkolben 24 ist. Das Dosierelement 23 erstreckt sich teilweise in die Dosierkammer 9. Eine Bewegung des Dosierelements 23 von einer Startposition, die in Figur 5 gezeigt ist und bei der sich nur ein kleiner Teil des Dosierelements 23 in die Dosierkammer 9 erstreckt, in eine Endposition, bei der sich ein größerer Teil des Dosierelements 23 in die Dosierkammer 9 erstreckt, verdrängt eine gewünschte Flüssigkeitsmenge aus der Dosierkammer 9. Der Volumenanteil des Dosierelements 23, der sich in der Endposition in die Dosierkammer erstreckt, ist deutlich kleiner als das Volumen der Dosierkammer. Um eine möglichst exakte Menge an Flüssigkeit abgeben zu können, muss nur der Dosierkolben 24 sehr genau gefertigt werden. Bevorzugt ist er deshalb ein Präzisionsteil, aus Metall hergestellt, alternativ aus anderen Materialien, insbesondere Kunststoffe.

Ein Aktuatorkontaktelement 25 ist Bestandteil des Dosiermoduls 20 und wirkt derart bevorzugt auf das Dosierelement 23, dass ein Absenken des Aktuatorkontaktelements 25 bevorzugt ein gleichzeitiges Absenken des Dosierelements 23 hervorruft. Das Aktuatorkontaktelement 25 ist als zylinderförmiges Kopfteil 26 ausgebildet, in das sich das obere Ende des Dosierkolbens 24 erstreckt. Das Kopfteil 26 und der Dosierkolben 24 sind dauerhaft miteinander verbunden, beispielsweise miteinander verklebt, verschweißt oder Ähnliches.

Das Aktuatorkontaktelement 25 wird von einem Aktuator 27 der Dosiereinrichtung 1 betätigt. Der Aktuator 27 kann beispielsweise ein Stößel 28 sein, der an das Aktuatorkontaktelement 25 ankoppelt und es von oben nach unten bewegt. In der gezeigten Ausführungsform genügt als Kopplung ein Anliegen des Aktuators 27 an dem Kontaktelement 25 und ein Drücken nach untern. Zur Ankopplung des Stößels 28 an das Kopfteil 26 wird eine Folie 29 durchstoßen, die eine Gehäuseöffnung 30 des Kartuschengehäuses 18 oberhalb des Kopfteils 26 abdeckt. Beim Durchstoßen der Folie 29 und beim Bewegen des Aktuatorkontaktelements 25 (und somit des Dosierelements 23) führt der Stößel 28 eine lineare (eindimensionale) Bewegung aus. Er wird dabei bevorzugt von einem Linearantrieb der Dosiereinrichtung 1 angetrieben.

In einer bevorzugten Ausführungsform ist das Dosiermodul 20 derart ausgebildet, dass mit der eindimensionalen Bewegung des Aktuators 27, der auf das Akuatorkontaktelement 25 wirkt, sowohl eine Bewegung des Dosiermoduls 20 zwischen der Ruheposition und der Arbeitsposition wie auch eine Bewegung des Dosierelements 23 zwischen seiner Startposition und seiner Endposition bewirkt. Dies hat den Vorteil, dass mit nur einem (Linear)-Antrieb sowohl ein Annähern der Dosierspitze 3 an den Aufnahmekanal 4 wie auch die gewünschte Flüssigkeitsabgabe bewirkt werden kann. Die Dosiereinrichtung 1 kann deshalb konstruktiv sehr einfach und somit kostengünstig aufgebaut werden. Da nur ein Antrieb und nur ein Aktuator 27 vorhanden sind, ist eine derartige Dosiereinrichtung auch sehr robust.

Bevorzugt schließt das Dosiermodul 20 eine Dosierfeder 31 ein, die zwischen der Dosierkammer 9 und dem Aktuatorkontaktelement 25 wirkt. Die Federkraft und Federwirkrichtung der Dosierfeder 31 sind so bemessen, dass eine auf das Aktuatorkontaktelement 25 ausgeübte Druckkraft (nach unten) zunächst die Bewegung des Dosiermoduls 20 und dann die Bewegung des Dosierelements 23 antreibt. Vorzugsweise wird das Dosierelement 23 erst dann angetrieben, wenn die Bewegung des Dosiermoduls 20 gestoppt wurde, besonders bevorzugt durch einen Anschlag 34.

Figur 5 zeigt, dass sich die Dosierfeder 31 zwischen dem Kopfteil 26 und einer Federanlage 32 der Dosierkammer 9, durch welche sich das Dosierelement 23 erstreckt, abstützt. Die Dosierfeder 31 ist als Spiralfeder ausgebildet, die im gezeigten Beispiel durch das Kopfteil 26 zusammengedrückt wird. Selbstverständlich ist es auch möglich, die Feder so auszubilden, dass sie durch eine Bewegung des Kopfteils 26 nach unten aus ihrer Ruhelage heraus gespannt wird. Die hier gezeigte Dosierfeder 31 umschließt den Dosierkolben 25 derart, dass er sich entlang der Längsachse der Spiralfeder erstreckt.

Bevorzugt, wie in Figur 5 gezeigt, umfasst das Dosiermodul 20 eine Absenkfeder 33, die zwischen der Dosierkammer 9 und dem Anschlag 34 wirkt. Bevorzugt ist der Anschlag 34 an dem Gehäuse 18 der Kartusche 19 angeordnet. Die Wirkrichtung der Absenkfeder 33 stimmt mit der Wirkrichtung der Dosierfeder 31 überein. In der hier dargestellten Ausführungsform ist die Federwirkrichtung von oben nach unten gerichtet. Die Federkraft der Absenkfeder 33 ist geringer als die Federkraft der Dosierfeder 31. Dadurch wird erreicht, dass eine auf das Aktuatorkontaktelement 25 wirkende Druckkraft zunächst eine Bewegung des Dosiermoduls 20 nach unten antreibt und erst zu einem späteren Zeitpunkt, bevorzugt wenn die Bewegung des Dosiermoduls 20 durch den Anschlag 34 gestoppt wurde, eine Bewegung des Dosierkolbens 24.

In der Praxis werden die Dosierfeder 31 und die Absenkfeder 33 derart ausgewählt, dass die Federkonstante der Absenkfeder 33 geringer ist als die Federkonstante der Dosierfeder 31. Allerdings kann eine stärkere Federkraft einer der Federn gegenüber der anderen auch durch eine Vorspannung der jeweiligen Feder erzielt werden, beispielsweise bei gleichen Federkonstanten.

Die Dosierkammer 9 ist federbelastet mit dem Gehäuse 18 der Kartusche 19 über die Absenkfeder 33 verbunden. Die Absenkfeder 33 ist zwischen einem oberen Kragen 35 des Dosiermoduls 20 und einem unteren, flanschartigen ringförmigen Haltesteg 36 angeordnet. Sie wird bei Bewegung des Aktuatorkontaktelements 25 ebenfalls zusammengedrückt.

Der Bewegungsablauf bei einer dosierten Abgabe der Flüssigkeit wird im Folgenden beschrieben: Der Stößel 28 durchstößt die Folie 29 und drückt von oben auf das Kopfteil 26 des Aktuatorkontaktelements 25, d. h. er erzeugt eine Druckkraft, die auf das Kopfteil 26 wirkt. Da die Federkraft der Absenkfeder 33 geringer ist als der Federkraft der Dosierfeder 31, wird zunächst das Dosiermodul 20 samt Dosierkammer 9 nach unten bewegt, bis die Dosierspitze 3 ihre Arbeitsposition erreicht.

Die Bewegung des Dosiermoduls 20 von der Ruheposition in die Arbeitsposition findet von oben nach unten statt. In dieser Position stößt das Dosiermodul 20 am Anschlag 34 an. Der Anschlag 34 begrenzt somit den Bewegungsweg des Dosiermoduls 20. Er gewährleistet eine definierte Arbeitsposition der Dosierspitze 3. Alternativ könnte der Anschlag 34 auch Teil der Dosiereinrichtung 1 sein und damit unabhängig von der Kartusche 19.

Nun wirkt die von dem Stößel 28 ausgeübte Kraft auf das Kopfteil 26 und drückt die Dosierfeder 31 zusammen, wobei sich der Dosierkolben 24 in die Dosierkammer 9 hineinbewegt. Das während dieser Bewegung durch den Dosierkolben verdrängte Volumen entspricht der abgegebenen Flüssigkeitsmenge, die durch die Dosierspitze 3 in den Aufnahmekanal 4 des Testelementes 6 gelangt.

Nachdem die gewünschte Flüssigkeitsmenge aus der Dosierspitze 3 in den Aufnahmekanal 4 abgegeben worden ist, wird der Stößel 28 nach oben bewegt. Durch die Federkräfte der Dosierfeder 31 und der Absenkfeder 33 wird das Dosierelement 23 bzw. das Dosiermodul 20 ebenfalls nach oben bewegt, so dass das Dosierelement 23 wieder seine Startposition und das Dosiermodul 20 wieder seine Ruheposition erreicht. Die Bewegung des Dosierelements 23 und des Dosiermoduls 20 richtet sich nach den Federkräften der Federn 31, 33. Ihre Bewegungen können nacheinander, gleichzeitig oder zeitlich versetzt stattfinden. Aufgrund der nach oben ausgerichteten Federkraft der beiden Federn 31, 33 genügt es, dass der Stößel 28 an dem Aktuatorkontaktelement 25 nur anliegt. Eine ineinander greifende Kopplung ist nicht notwendig, da der Stößel 28 nur Kräfte nach unten übertragen muss.

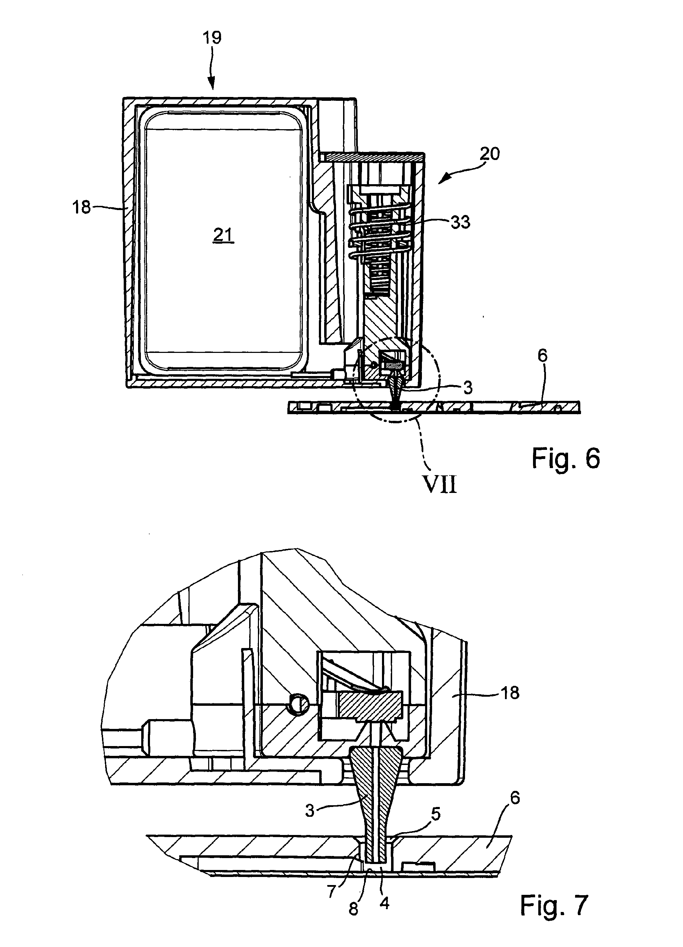

Figur 6 zeigt eine weitere Schnittdarstellung der erfindungsgemäßen Kartusche 19, mit dem Dosiermodul 20 in seiner Arbeitsposition. Die Dosierspitze 3 ist dem korrespondierenden Aufnahmekanal 4 des Testelementes 6 derart angenähert, dass sie durch die Aufnahmeöffnung 5 in den Aufnahmekanal 4 hereinreicht. Die Absenkfeder 33 und die Dosierfeder 31 sind vollständig zusammengedrückt, so dass sich der Dosierkolben 24 in seiner Endposition befindet. Die gewünschte Flüssigkeitsmenge ist also bereits aus der Dosierspitze 3 ausgeströmt.

Die Anordnung der Dosierspitze 3 in dem Aufnahmekanal 4 ist in Figur 7 im Detail gezeigt. Deutlich zu erkennen ist, dass an der Dosierspitze 3 kein Flüssigkeitsrest hängen bleibt. Die gesamte aus der Dosierspitze 3 ausgetretene Flüssigkeitsmenge wird durch Saugwirkung in den Aufnahmekanal 4 eingesaugt. Die Außenseite der Dosierspitze 3 ist flüssigkeitsfrei, jedenfalls in dem Sinne, dass höchstens noch eine zu vernachlässigende Flüssigkeitsmenge an ihr haften bleibt. Die Saugwirkung wird dabei durch eine Kombination der Kohäsionskraft der Flüssigkeit, der Adhäsionskraft zwischen Flüssigkeit und Boden 8 des Testelementes 6 sowie durch Kapillarkräfte des Aufnahmekanals 4 hervorgerufen.

Diese Saugwirkung wird in einer besonderen Ausführungsform dadurch unterstützt, dass der Aufnahmekanal 4 des Testelementes 6 hydrophil ausgebildet ist. Die Dosierspitze 3 der Dosiereinheit 1 ist bevorzugt hydrophob oder hydrophobisiert. Auf diese Weise wird der Flüssigkeitsübertrag von der Dosierspitze 3 auf den Aufnahmekanal 4 unterstützt.

Um eine zuverlässige Übertragung der Flüssigkeit in den Aufnahmekanal 4 zu gewährleisten, darf der Abstand zwischen der Dosierspitze und dem Boden 8 des Testelementes 6 höchstens 1 mm betragen. In der in Figur 7 gezeigten Ausführungsform hat die Dosierspitze 3 einen Innendurchmesser von 0,5 mm und einen Außendurchmesser von 1,5 mm. Der Abstand der Dosierspitze 3 vom Boden 8 des insgesamt 3 mm hohen Testelementes 6 (Spritzgussschicht aus Kunststoff mit einer Dicke von 2,7 mm und darunter angeordneter (selbstklebender) Bodenfolie mit einer Dicke von 0,3 mm) beträgt 0,8 mm bis 0,6 mm. Somit reicht die Dosierspitze 3 ca. 1,9 - 2,1 mm in die Aufnahmeöffnung 5 des Testelementes hinein.

In einer bevorzugten Ausführungsform der erfindungsgemäßen Kartusche 19 hat die Dosierkammer 9 einen Flüssigkeitseinlass 37, durch den Flüssigkeit aus dem Reservoir 21 und dem Verbindungsrohr 22 in die Dosierkammer 9 eintreten kann, und einen Flüssigkeitsauslass 38, durch den eine Flüssigkeitsmenge aus der Dosierkammer 9 in das Dosierrohr 2 austreten kann. Um die Flüssigkeitsströme in und aus der Dosierkammer 9 zu steuern, ist vorteilhaft ein Einlassventil 39 und ein Auslassventil 40 vorgesehen. Das Einlassventil 39 kann den Flüssigkeitseinlass 37 öffnen und verschließen; das Auslassventil 40 dient zum Verschließen und Öffnen des Flüssigkeitsauslasses 38 aus der Dosierkammer 9.

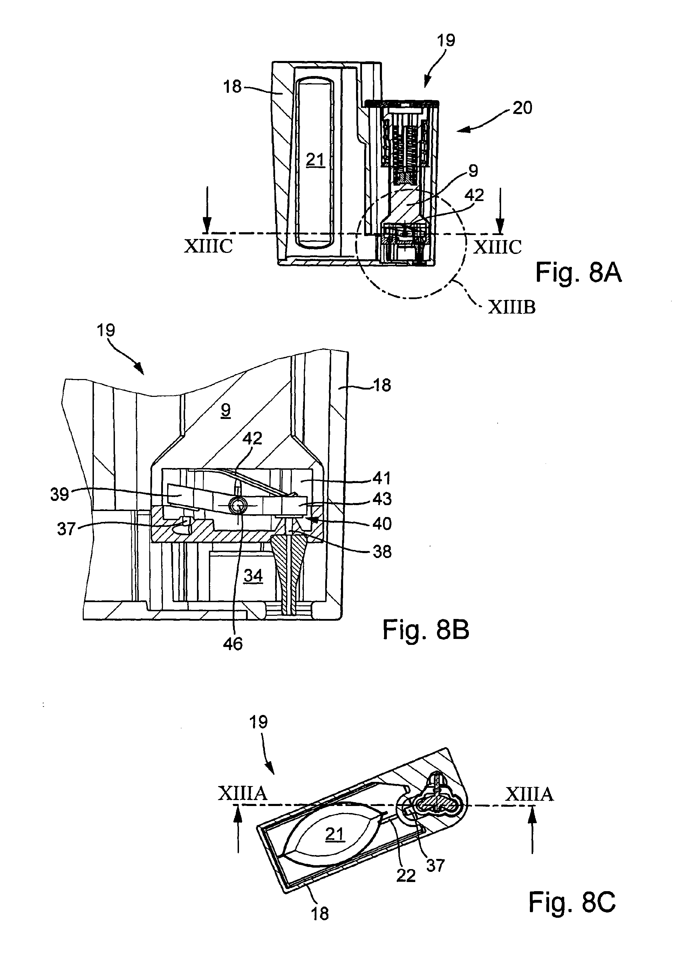

Figur 8 zeigt einen weiteren Schnitt durch die erfindungsgemäße Kartusche 19. In einer bevorzugten Ausführungsform sind das Einlassventil 39 und das Auslassventil 40 Bestandteil eines Wippventils 41. Das Wippventil 41 ist derart ausgebildet, dass das Einlassventil 39 und das Auslassventil 40 zwingend unterschiedliche Schaltzustände aufweisen. Ist das eine Ventil geöffnet, so ist das andere Ventil geschlossen.

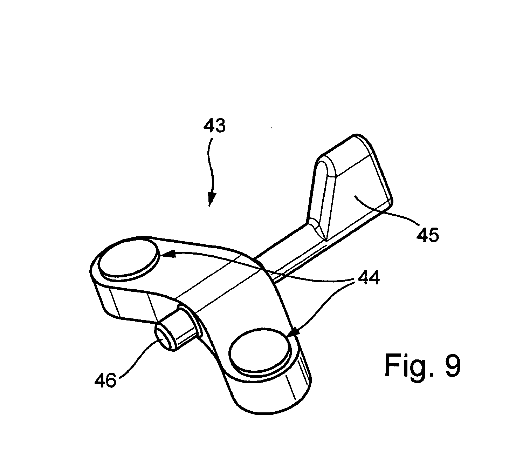

Figur 9 zeigt das Wippventil 41 im Detail. Eine Wippfeder 42 wirkt derart auf eine Ventilwippe 43 des Wippventils 41, dass das Auslassventil 40 in der Ruhestellung des Wippventils 41 geschlossen ist und somit keine Flüssigkeit in das Dosierrohr 2 austreten kann. Vorteilhafterweise ist die Ventilfeder 42 als Blattfeder ausgebildet; andere Federn sind jedoch auch möglich. Die Ventilfeder 42 bewirkt eine automatische Rückstellung des Wippventils 41 von dem geschalteten (geöffneten) Zustand des Auslassventils 40 in den geschlossenen Zustand. Um eine möglichst gute Abdichtung des Flüssigkeitseinlasses 37 und des Flüssigkeitsauslasses 38 zu gewährleisten, weist die Ventilwippe 43 zwei runde Dichtungselemente 44 auf, die den Einlass 37 und Auslass 38 zuverlässig verschließen. Bevorzugt sind die Dichtelemente 44 ausgespritzt; sie bestehen z. B. aus TPE. Vorteilhaft sind sie etwas größer als der Einlass 37 bzw. Auslass 38.

An der Ventilwippe 43 ist ein Ventilhebel 45 angeformt, so dass das Wippventil 41 über einen (nicht gezeigten) Ventilaktuator betätigt werden kann. Bevorzugt ist hierzu ein elektrischer Antrieb vorgesehen, der das Wippventil 41 aus seiner Ruhestellung in eine Offenstellung des Flüssigkeitsauslasses 38 bewegt. Bevorzugt wird der Ventilaktuator durch eine externe Steuerung gesteuert. Das Wippventil 41 ist somit extern steuerbar. Dabei kann sowohl elektronisch als auch mechanisch gewährleistet werden, dass eine Betätigung des Ventilhebels 45 ausschließlich dann möglich ist, wenn das Dosierrohr 2 und damit das Dosiermodul 20 in der Arbeitsposition angeordnet sind. Somit ist ein Dosieren einer Flüssigkeit aus der Dosierkammer 9 nur möglich, wenn das Dosiermodul 20 in der Arbeitsposition ist. Wird das Wippventil 41 geschaltet, dreht sich die Ventilwippe 43 um ca. 10° (in Figur 8 entgegen den Uhrzeigersinn) um eine Ventilwelle 46, die die Drehachse bildet und sich in Verlängerung des Ventilhebels erstreckt, und verschließt damit den Flüssikeitseinlass 37 und somit das Reservoir 21. Gleichzeitig öffnet der Flüssigkeitsauslass 38 und somit der Zugang zur Dosierspitze 3.

Durch die externe Steuerung des Wippventils 41 wird die Betriebssicherheit beispielsweise gegenüber einem Rückschlagventil verbessert. Diese Verbesserung wird durch eine Erhöhung der (externen) Andruckkräfte erreicht, die somit das Ventil besser abdichten lassen. Weiterhin besteht bei einem extern gesteuerten und geschalteten Wippventil 41 die Möglichkeit, eine Sensoreinheit zur Überwachung der Ventilstellung in die Dosiereinrichtung 1 zu integrieren, um eine Fehlstellung des Wppventils 41 zu erkennen und eine Verunreinigung der Dosiereinrichtung 1 oder des Testelementes 6 durch die im Reservoir 21 enthaltene Flüssigkeit, z. B. einen Waschpuffer, zu verhindern, ebenso eine Unterdosierung. Das präzise Schalten des Wippventils 41 durch die externe Steuerung hat zudem den Vorteil, dass die Dosiergenauigkeit nochmals erhöht werden kann.

## Patentansprüche

1. Verfahren zum Dosieren einer Flüssigkeit in einen Aufnahmekanal eines Testelementes (6) zur Analyse von Körperflüssigkeiten mittels einer Dosiereinrichtung (1), welche umfasst,
- eine Dosierkammer (9),
- ein mit der Dosierkammer (9) in Fluidverbindung stehendes Dosierrohr (2) zur Übertragung der Flüssigkeit in den Aufnahmekanal (4) des Testelementes (6),
- eine Flüssigkeitssteuereinrichtung (14) zur dosierten Steuerung des Flüssigkeitsstroms von der Dosierkammer (9) durch das Dosierrohr (2) in den Aufnahmekanal (4), und
- eine Bewegungseinrichtung (16), durch die eine Relativbewegung zwischen dem Dosierrohr (2) und dem Testelement (6) bewirkt werden kann, wobei der Bewegungsweg eine Ruheposition und eine Arbeitsposition des Dosierrohres (2) relativ zu dem Aufnahmekanal (4) des Testelementes (6) einschließt und eine Dosierspitze (3) des Dosierrohres (2) in der Arbeitsposition näher bei dem Aufnahmekanal (4) ist als in der Ruheposition,
wobei das Verfahren folgende Schritte umfasst:
- Betätigen der Bewegungseinrichtung (16) derart, dass das Dosierrohr (2) aus der Ruheposition in die Arbeitsposition bewegt wird,
- Betätigen der Flüssigkeitssteuereinrichtung (14) derart, dass eine definierte Flüssigkeitsmenge aus der Dosierkammer (9) durch das Dosierrohr (2) in den Aufnahmekanal (4) des Testelementes (6) dosiert abgegeben wird,
wobei die Spitze (3) des Dosierrohres (2) in der Arbeitsposition dem Aufnahmekanal (4) des Testelementes (6) derart angenähert ist, dass während der dosierten Abgabe eine Flüssigkeitsbrücke zwischen der Dosierspitze (3) des Dosierrohres (2) und dem Aufnahmekanal (4) des Testelementes (6) gebildet wird und am Ende der dosierten Flüssigkeitsabgabe wenigstens Teile der Flüssigkeit durch Saugkraft in den Aufnahmekanal (4) gelangen.

2. Verfahren nach Anspruch 1, **dadurch gekennzeichnet, dass** sich die Dosierspitze (3) des Dosierrohres (2) in der Arbeitsposition in dem Aufnahmekanal (4) befindet.

3. Verfahren nach einem der vorhergehenden Ansprüche, **dadurch gekennzeichnet, dass** in der Arbeitsposition des Dosierrohres (2) der kleinste Abstand zwischen dessen Dosierspitze (3) und der Wand (7,8) des Aufnahmekanals(4) höchstens 1 mm beträgt.

4. Dosiereinrichtung zum Dosieren einer Flüssigkeit in einen Aufnahmekanal eines Testelementes zur Analyse von Körperflüssigkeiten, umfassend
- eine Dosierkammer (9),
- ein mit der Dosierkammer (9) in Fluidverbindung stehendes Dosierrohr (2) zur Übertragung der Flüssigkeit in den Aufnahmekanal (4) des Testelementes (6),
- eine Flüssigkeitssteuereinrichtung (14) zur dosierten Steuerung des Flüssigkeitsstroms von der Dosierkammer (9) durch das Dosierrohr (2) in den Aufnahmekanal (4), und
- eine Bewegungseinrichtung (16), durch die eine Relativbewegung zwischen dem Dosierrohr (2) und dem Testelement (6) bewirkt werden kann, wobei der Bewegungsweg eine Ruheposition und eine Arbeitsposition des Dosierrohres (2) relativ zu dem Aufnahmekanal (4) des Testelementes (6) einschließt und eine Dosierspitze (3) des Dosierrohres (2) in der Arbeitsposition näher bei dem Aufnahmekanal (4) ist als in der Ruheposition,
wobei
- die Dosierspitze (3) des Dosierrohres (2) in der Arbeitsposition dem Aufnahmekanal (4) des Testelementes (6) derart angenähert ist, dass während der dosierten Abgabe eine Flüssigkeitsbrücke zwischen der Dosierspitze (3) des Dosierrohres (2) und dem Aufnahmekanal (4) des Testelementes (6) gebildet wird und am Ende der dosierten Flüssigkeitsabgabe wenigstens Teile der Flüssigkeitsmenge durch Saugkraft in den Aufnahmekanal (4) gelangen.

5. Dosiereinrichtung nach Anspruch 4, **dadurch gekennzeichnet, dass** sie (1) ein Dosierelement (23) einschließt, das sich wenigstens teilweise in die Dosierkammer (9) erstreckt und auf einem Bewegungsweg zwischen einer Startposition, bei der sich ein kleinerer Teil des Dosierelements (23) in die Dosierkammer (9) erstreckt, und einer Endposition, bei der sich ein größerer Teil des Dosierelements (23) in die Dosierkammer (9) erstreckt, relativ zu der Dosierkammer (9) bewegbar ist, wobei das durch die Bewegung des Dosierelements (23) von der Startposition in die Endposition verdrängte Volumen in der Dosierkammer (9) der abzugebenden Flüssigkeitsmenge entspricht,

6. Dosiereinrichtung nach Anspruch 4 oder 5, **dadurch gekennzeichnet, dass** die Dosierkammer (9) und das Dosierrohr (2) Bestandteil eines Dosiermoduls (20) sind, in dem sie (9,2) relativ zueinander fixiert sind, so dass sie gemeinsam von der Ruheposition in eine Arbeitsposition bewegbar sind.

7. Dosiereinrichtung nach Anspruch 5 und 6, **dadurch gekennzeichnet, dass** die Bewegungen des Dosiermoduls (20) und des Dosierelementes (23) derart gesteuert werden, dass das Dosiermodul (20) seine Arbeitsposition erreicht, bevor das Dosierelement (23) in seiner Endposition ist.

8. Dosiereinrichtung nach Anspruch 5 und 6, **dadurch gekennzeichnet, dass** das Dosiermodul (20) ein Aktuatorkontaktelement (25) aufweist, das auf das Dosierelement (23) wirkt und von einem Aktuator (27) der Dosiereinrichtung (1) betätigt wird.

9. Dosiereinrichtung nach einem der Ansprüche 6 bis 8, **dadurch gekennzeichnet, dass** die Dosiereinrichtung (1) eine disposible Kartusche (19) umfasst, die das Dosiermodul (20), ein Reservoir (21) für Flüssigkeit und ein Verbindungsrohr (22) zur Fluidverbindung zwischen dem Reservoir (21) und der Dosierkammer (9) einschließt.

10. Dosiereinrichtung nach einem der Ansprüche 8 oder 9, **dadurch gekennzeichnet, dass** das Dosiermodul (20) so ausgebildet ist, dass mit einer eindimensionalen Bewegung des auf das Aktuatorkontaktelement (25) wirkende Aktuators (27) sowohl die Bewegung des Dosiermoduls (20) zwischen der Ruheposition und der Arbeitsposition als auch die Bewegung des Dosierelementes (23) zwischen seiner Startposition und seiner Endposition bewirkt wird.

11. Dosiereinrichtung nach Anspruch 10, **dadurch gekennzeichnet, dass** das Dosiermodul (20) eine zwischen der Dosierkammer (9) und dem Aktuatorkontaktelement (25) wirkende Dosierfeder (31) einschließt, deren Federkraft und Federwirkrichtung so bemessen sind, dass eine auf das Aktuatorkontaktelement (25) ausgeübte Druckkraft zunächst die Bewegung des Dosiermoduls (20) und dann, vorzugsweise nachdem die weitere Bewegung des Dosiermoduls (20) durch einen Anschlag (34) gestoppt wurde, die Bewegung des Dosierelementes (23) antreibt.

12. Dosiereinrichtung nach Anspruch 11, **dadurch gekennzeichnet, dass** das Dosiermodul (20) eine zwischen der Dosierkammer (9) und dem Anschlag (34) wirkende Absenkfeder (33) mit einer Wirkrichtung, die mit der Wirkrichtung der Dosierfeder (31) übereinstimmt, einschließt,
wobei die Federkraft geringer ist als die Federkraft der Dosierfeder (31), so dass eine auf das Aktuatorkontaktelement wirkende Druckkraft zunächst eine Bewegung des Dosiermoduls (20) antreibt.

13. Dosiereinrichtung nach einem der Ansprüche 4 bis 12, **dadurch gekennzeichnet, dass** die Dosierkammer (9) einen Flüssigkeitseinlass (37), durch den Flüssigkeit aus dem Reservoir (21) in die Dosierkammer (9) eintreten kann, und einen Flüssigkeitsauslass (38), durch den eine Flüssigkeitsmenge aus der Dosierkammer (9) in das Dosierrohr (2) austreten kann, aufweist.

14. Dosiereinheit nach Anspruch 13, **dadurch gekennzeichnet, dass** die Dosierkammer (9) ein Einlassventil (39) zum Verschließen und Öffnen des Flüssigkeitseinlasses (37) und/oder ein Auslassventil (40) zum Verschließen und Öffnen des Flüssigkeitsauslasses (38) umfasst.

15. Dosiereinrichtung nach Anspruch 14, **dadurch gekennzeichnet, dass** das Einlassventil (39) und das Auslassventil (40) Bestandteil eines Wippventils (41) sind, das derart ausgebildet ist, dass das Einlassventil (39) und das Auslassventil (40) zwingend unterschiedliche Schaltzustände aufweisen.

16. Disposible Kartusche zum Dosieren einer Flüssigkeit in einen Aufnahmekanal eines Testelementes zur Analyse von Körperflüssigkeiten, insbesondere als Bestandteil einer Dosiereinrichtung (9) nach einem der Ansprüche 4 bis 15, umfassend
- ein Dosiermodul (20) mit einer Dosierkammer (9) und einem mit der Dosierkammer (9) in Fluidverbindung stehenden Dosierrohr (2) zur Übertragung der Flüssigkeit in den Aufnahmekanal (4) des Testelementes (6),
- ein Reservoir (21) für Flüssigkeit, und
- ein Verbindungsrohr (22) zur Fluidverbindung zwischen dem Reservoir (21) und der Dosierkammer (9),
wobei
- das Dosierrohr (2) des Dosiermoduls (20) beweglich ist,
- der Bewegungsweg des Dosierrohres (2) eine Ruheposition und eine Arbeitsposition einschließt,
- eine Dosierspitze (3) des Dosierrohres (2) in der Ruheposition weiter von dem Aufnahmekanal (4) entfernt ist als in der Arbeitsposition, und
- die Dosierspitze (3) des Dosierrohres (2) in der Arbeitsposition dem Aufnahmekanal (4) des Testelementes (6) derart angenähert ist, dass während der dosierten Abgabe eine Flüssigkeitsbrücke zwischen der Dosierspitze (3) des Dosierrohres (2) und dem Aufnahmekanal (4) des Testelementes (6) gebildet wird und am Ende der dosierten Flüssigkeitsabgabe wenigstens Teile der Flüssigkeitsmenge durch Saugkraft in den Aufnahmekanal (4) gelangen.
